Europäisches Patentamt

European Patent Office

Office européen des brevets

(19)

(11) Publication number: **0 229 326 B1**

(12) **EUROPEAN PATENT SPECIFICATION**

(45) Date of publication of patent specification: **13.03.91** (51) Int. Cl.⁵: **B32B 17/10, B64C 1/14**

(21) Application number: **86117239.3**

(22) Date of filing: **10.12.86**

(54) Aircraft windshield.

(30) Priority: **19.12.85 US 811243**

(43) Date of publication of application:
**22.07.87 Bulletin 87/30**

(45) Publication of the grant of the patent:
**13.03.91 Bulletin 91/11**

(84) Designated Contracting States:
**DE FR GB IT**

(56) References cited:
**EP-A- 0 098 961**
**EP-A- 0 117 512**
**EP-A- 0 197 806**
**FR-A- 2 148 192**
**GB-A- 1 576 394**

(73) Proprietor: **PPG INDUSTRIES, INC.**
**One PPG Place**
**Pittsburgh Pennsylvania 15272(US)**

(72) Inventor: **Brown, Theresa S.**
**1939 Keel Mountain Road**
**Gurley Alabama 35748(US)**
Inventor: **Walters, Patricia Burchfield**
**Rt. 1 Box 655**
**Harvest Alabama 35749(US)**
Inventor: **French, Radford**
**Route 4**
**Arab Alabama 35016(US)**
Inventor: **Parvin, Connie J.**
**415 Charley Patterson Road**
**New Market Alabama 35761(US)**
Inventor: **Rothe, Wolfram Friedrich**
**1009 Bayfield Drive**
**Huntsville Alabama 35802(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2(DE)**

## Description

This invention relates to lightweight aircraft transparencies and, in particular, to an antilacerative shield for an impact resistant aircraft windshield.

Technical Considerations

Windshields in aircraft applications must be resistant to weathering, scratching and high impact. A glass windshield can provide adequate weathering and scratch resistance, but glass plies may shatter upon impact. In order for a glass sheet to afford sufficient protection against shattering upon high impact, it would require a glass thickness that would be unacceptably heavy and optically inferior to the type of vision panel required for an aircraft windshield. As an alternative, thinner glass plies can be used in combination with lighter weight material plies such as polycarbonates or acrylic resins to provide a windshield that is lightweight, scratch and weather resistant and impact resistant. These glass/plastic composites generally include layers of flexible, compressible material interposed between adjacent glass and plastic layers to help bond the unit together. If the bonding between the glass and plastic is adequate, glass shards resulting from impact will remain adhered to the plastic rather than separate from the unit and inflict injury.

GB-A-I 576 394 discloses a polymeric sheet for use in preparing a glazing laminate comprising a thermoplastic polyurethane resin and a thermoset (crosslinked) polyurethane resin at the exposed surface. The thermoplastic polyurethane may be prepared from a diol of a polyester or a polyether. The thermoset polyurethane can be prepared from a multitude of polyisocyanates and polyol esters respectively polyether polyols with more than 2 OH-groups.

EP-A-I97 806 refers to laminated glass panes having a polyurethane based adhesive coating prepared from a moisture-insensitive polyol. These polyols may be polyether diols, polycarbonate diols, polybutadiene polyols and polycaprolactone diols. The adhesive polyurethane layer may be combined with a thermosetting polyurethane layer. The only thermosetting polyurethane which is mentioned is a polyether polyurethane.

EP-A-098 96I describes an impact resistant transparency comprising two polyurethane layers. The intermediate layer between the substrate and the exposed layer is a thermoplastic polyurethane which is a polyester urethane. The layer constituting the exposed surface is a thermoplastic polyurethane having functional groups allowing crosslinking. For example a polyurethane prepared from a mixture of polycaprolactone diol, dimethylol propionic acid and a polyisocyanate. This polyurethane layer is treated to crosslink the resin.

It is the object of this invention to provide a lightweight impact resistant aircraft transparency with an antilacerative inner shield.

This object is attained by an impact resistant transparency comprising:

a glass ply ; an internal moisture resistant, thermally stable polyurethane interlayer which is bonded to said glass ply ; and an environmentally stable layer of polycaprolactone urethane , which is bonded to said interlayer, characterized in that the interlayer is a polyether urethane and the polycaprolactone urethane of the layer is not crosslinked.

The double urethane layer forms an antilacerative shield that will hold a shattered outer glass ply thereto and resist puncturing due to sharp glass pieces.

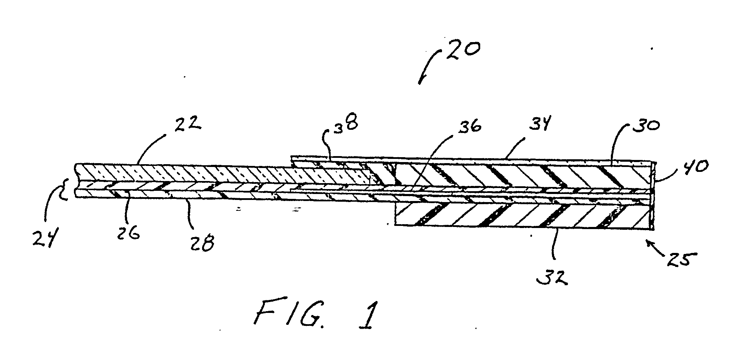

BRIEF DESCRIPTION OF THE DRAWING

FIG. I is a cross-section of a windshield according to the preferred embodiment of the present invention.

DETAILED DESCRIPTION OF THE INVENTION

The laminated product of the present invention is illustrated in FIG. I. The laminate 20 includes an glass ply 22 and antilacerative liner 24 and an edge attachment 25. Although not limiting to this invention, glass ply 22 is preferably tempered either by heat treatment, chemical treatment, or a combination of both. The antilacerative liner 24 includes at least two urethane layers; interlayer 26 and a layer 28. The edge attachment 25 preferably includes phenolic blocks 30 and 32, resin impregnated fiberglass straps 34 and 36 and seals 38 and 40 for mounting the laminate 20 on an aircraft frame (not shown ) The laminate is preferably positioned so that layer 28 is the inner layer and the glass ply is the outer layer.

The interlayer 26 is a urethane that exhibits good moisture resistance, good adhesion to glass, and good low temperature characteristics, i.e., maintains its flexibility at low temperature. This latter property reduces the possibility of the interlayer 26 pulling glass chips from the glass ply 22 due to contraction and brittleness at low temperatures. The interlayer 26 is a polyether urethane. Polyether urethane has poor ultraviolet radiation (UV) resistance so that an additional coating is required. The layer 28 provides greater UV resistance and is environmentally stable, i.e. it will resist oxidation upon exposure to the atmosphere. The inner layer 28 is a polycaprolactone urethane. The polycaprolactone urethane is stiffer than the polyether urethane interlayer 26 at low temperatures. As a result, if the layer 28 were bonded direccly to the glass 22, it would chip the glass 22 at low temperatures due to contraction and brittleness. The layer 28 will remain adhered to the interlayer 26 at the low temperatures to which an aircraft windshield is subjected.

After the components of the laminate 20 are assembled the unit is laminated in any convenient manner known in the art. Although not limiting to this invention, preferably a pressing plate (not shown) is positioned flush againsst the exposed surface of innerlayer 28 and held thereagainst in any convenient manner, e.g., taping. The resulting assembly is inserted into a laminating bag of the type disclosed in US-A-3,255,567 to Keslar et al. which is thereafter evacuated and sealed. The bag containing the assembly is placed in an autoclave where it is exposed to elevated temperatures and pressures to laminate the assembly. The use of pressing plates and/or bags for laminating aircraft transparencies as taught in US -A- 4,231,827 to Wilson et al.; 4,396,826 to Orcutt et al.; and 4,504,341 to Radzwil et al.. is well known in the aircraft transparency laminating art.

A ball drop test was performed on samples of laminate 20 to examine its impact resistance. The tested samples were(12" by 12"') 30.5 cm by 30.5 cm and included 0.24 cm (3/32") thick chemically tempered glass,(0.025") 0.635 cm (0.025") thick polyether urethane interlayer, and(0.025") 0.635 cm (0.025") thick polycaprolactone urethane innerlayer. A 0.45 kg (one pound) or 0.9 kg (two pound) ball was dropped at various heights onto the samples at temperatures between -17.8°C (0°F) and -45.6°C (-50°F). A sample was considered to have passed the ball drop test if upon breaking the ball did not penetrate the combined urethane liner 24 and the shattered glass ply 22 adhered to the liner 24. The test results are shown in Table I.

## TABLE 1

| Temperature | Sample No. | Ball Weight (kg) | Drop Height (cm) | Test Result |
|---|---|---|---|---|
| -17,8°C | 1 | 0.45 | 305 | No Break |
| | 1 | 0.45 | 610 | Break - passed |
| | 2 | 0.45 | 610 | Break - passed |
| -28,9°C | 3 | 0.45 | 610 | No Break |
| | 3 | 0.45 | 915 | Break - passed |
| | 4 | 0.45 | 915 | Break - passed |
| -34,4°C | 5 | 0.45 | 915 | Break - passed |
| | 6 | 0.9 | 610 | Break - passed |
| -40°C | 7 | 0.45 | 610 | No Break |
| | 7 | 0.45 | 915 | Break - passed |
| | 8 | 0.45 | 915 | Break - passed |
| -45,6°C | 9 | 0.45 | 610 | Break - passed |
| | 10 | 0.45 | 915 | Break - passed |

As can be seen in Table I the samples passed the test at temperatures of -45.6°C with a 0.45 kg ball impacting the sample from a height of 9l5 cm. These test results are comparable to results attained using other interlayers employed in aircraft transparencies.

## Claims

1. An impact resistant transparency comprising: a glass ply (22); an internal moisture resistant, thermally stable polyurethane interlayer (26) which is bonded to said glass ply (22); and an environmentally stable layer of polycaprolactone urethane (28), which is bonded to said interlayer (26). **characterized in that** the interlayer (26) is a polyether urethane and the polycaprolactone urethane of the layer (28) is not crosslinked.

## Revendications

Elément transparent resistant aux chocs, comprenant une lame de verre (22); une couche intermédiaire (26) de Polyuréthanne thermiquement stable, résistant à l'humidité, interne, qui est liée à ladite lame de verre (22); et une couche stable dans l'environnement de polycaprolactone-uréthanne (28) qui est liée à ladite couche intermédiaire (26), caractérisé en ce que la couche intermédiaire (26) est un polyéther-uréthanne et le polycaprolactone-uréthanne de la couche (28) n'est pas réticulé.

## Ansprüche

Schlagzähes, transparentes Verbundmaterial mit einer Glascheibe (22), einer inneren feuchtigkeitsbeständigen, thermisch stabilen Polyurethanzwischenschicht (26), die mit der Glasscheibe (22) verbunden ist, und einer gegenüber Umwelteinfluß beständigen Schicht (28) aus Polycaprolactonurethan, die mit der Zwischenschicht (26) verbunden ist, **dadurch gekennzeichnet,** daß die Zwischenschicht (26) ein Polyetherurethan ist und daß das Polycaprolactonurethan der Schicht (28) nicht vernetzt ist.

FIG. 1